(19) **Europäisches Patentamt / European Patent Office / Office européen des brevets**

(11) **EP 4 685 861 A1**

(12) **EUROPEAN PATENT APPLICATION**
published in accordance with Art. 153(4) EPC

(43) Date of publication:
**28.01.2026 Bulletin 2026/05**

(21) Application number: **23933894.0**

(22) Date of filing: **20.12.2023**

(51) International Patent Classification (IPC):
**H01M 4/133** $^{(2010.01)}$     **H01M 10/0525** $^{(2010.01)}$

(52) Cooperative Patent Classification (CPC):
**Y02E 60/10**

(86) International application number:
**PCT/CN2023/140127**

(87) International publication number:
**WO 2024/217031 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2023 CN 202310458235**

(71) Applicant: **Sunwoda Mobility Energy Technology Co., Ltd.**
**Shenzhen, Guangdong 518107 (CN)**

(72) Inventors:
• **LI, Man**
  **Shenzhen, Guangdong 518107 (CN)**
• **LIU, Peng**
  **Shenzhen, Guangdong 518107 (CN)**
• **CHEN, Yun**
  **Shenzhen, Guangdong 518107 (CN)**
• **LV, Guoxian**
  **Shenzhen, Guangdong 518107 (CN)**
• **CHU, Chunbo**
  **Shenzhen, Guangdong 518107 (CN)**

(74) Representative: **Boult Wade Tennant LLP**
**Salisbury Square House**
**8 Salisbury Square**
**London EC4Y 8AP (GB)**

(54) **SECONDARY BATTERY AND ELECTRIC DEVICE**

(57)     A secondary battery and an electric device. The secondary battery includes a negative electrode plate, which includes a negative electrode current collector and a negative electrode active material layer arranged on the surface of the negative electrode current collector, wherein the negative electrode active material layer includes a negative electrode active substance, and a surface of the negative electrode active material layer is provided with a protective film. The negative electrode plate satisfies: $0.05 < Dv50/A < 0.25$, $300 \leq A/B \leq 5000$, and $a < Dv50 < 25$, wherein $Dv50$ is the corresponding particle size when the cumulative volume percentage of the negative electrode active substance reaches 50%, with the unit thereof being $\mu m$; A is the thickness of the negative electrode active material layer, with the unit thereof being $\mu m$; and B is the thickness of the protective film, with the unit thereof being $\mu m$. The secondary battery has the characteristic of excellent dynamic performance, and can take into account the characteristics of a long cycle life and a high energy density simultaneously, thereby solving the problem of relatively poor fast charging performance of the battery on the premise of a high energy density.

FIG. 1

## Description

The present disclosure claims the priority of a Chinese patent application submitted to the Patent Office of the China National Intellectual Property Administration on April 19, 2023, with application No. 202310458235.4 and entitled "SECONDARY BATTERY AND ELECTRIC DEVICE", which is incorporated in the present disclosure by reference in its entirety.

## FIELD

Embodiments of the present disclosure relate to but are not limited to the technical field of batteries, specifically to a secondary battery and an electric device.

## BACKGROUND

A secondary battery, especially a lithium-ion battery, brings great convenience to people's daily lives. The lithium-ion battery occupies the majority of the market share in the market of mobile terminal products and new energy vehicles due to its excellent electrochemical performance such as high energy density, high voltage, and low self-discharge, etc. Most of the lithium-ion batteries use graphite as a negative electrode because the graphite has a high theoretical capacity. However, during high-rate charging of a lithium-ion negative electrode, a surface of the negative electrode is prone to result in the precipitation of metallic lithium, which can cause a decrease in reversible capacity of the battery, a shortened cycle life, while leading to high internal polarization voltage, decreased fast charging capability, and prolonged charging time.

## SUMMARY

### Technical problem

The present disclosure provides a secondary battery and an electric device, in order to solve the problem of relatively poor fast charging performance of the battery on the premise of a high energy density.

### Technical solution

An overview of the subject matter described in detail herein is set forth below. The overview is not intended to limit the scope of protection of the claims.

In a first aspect, the present disclosure provides a secondary battery including a negative electrode plate and a positive electrode plate, where the positive electrode plate includes a positive electrode current collector and a positive electrode active material layer arranged on a surface of the positive electrode current collector, and the positive electrode active material layer includes lithium nickel cobalt manganese oxide;

the negative electrode plate includes a negative electrode current collector and a negative electrode active material layer arranged on a surface of the negative electrode current collector; the negative electrode active material layer includes a negative electrode active substance, and a surface of the negative electrode active material layer is provided with a protective film, the negative electrode plate satisfies:

$0.05 < Dv50/A < 0.25$, $300 \leq A/B \leq 5000$ and $5 \leq Dv50 \leq 25$; where Dv50 is the corresponding particle size when the cumulative volume percentage of the negative electrode active substance reaches 50%, with the unit thereof being $\mu m$, A is the thickness of the negative electrode active material layer, with the unit thereof being $\mu m$, and B is the average thickness of the protective film, with the unit thereof being $\mu m$.

Optionally, the negative electrode plate satisfies: $600 < A/B < 2000$.

Optionally, the secondary battery includes an organic electrolyte including an organic solvent, hydrogen fluoride, and a fluorine-containing lithium salt;

the secondary battery satisfies: $0.75 \leq 1000B/C \leq 3$; where, B is the thickness of the protective film, with the unit thereof being $\mu m$; and C is the concentration of hydrogen fluoride in the organic electrolyte, with the unit thereof being ppm.

Optionally, $90 \leq A \leq 180$.

Optionally, $0.015 \leq B \leq 0.3$.

Optionally, $5 \leq C \leq 500$.

Optionally, the fluorine-containing lithium salt includes $LiPF_6$, and at least one of $LiPO_2F_2$, LiFSI and LiTFSI.

Optionally, the porosity of the negative electrode active material layer is from 20% to 50%.

Optionally, the compaction density of the negative electrode active material layer is from 1.3 $g/cm^3$ to 1.7 $g/cm^3$.

Optionally, the negative electrode active substance includes at least one of artificial graphite, natural graphite, mesocarbon microbeads, hard carbon, soft carbon, carbon fiber, and modified graphite.

Optionally, the lithium nickel cobalt manganese oxide includes $Li_aNi_xCo_yMn_zM_bO_2$; where, $0.9 < a < 1.1$, $0.6 \leq x < 1$, $0 < y < 0.3$, $0 < z < 0.4$ and $0 \leq b < 0.15$, M includes one or more of Zr, Zn, Cu, Cr, Mg, Fe, V, Ti, Sr, Sb, Y, W, and Nb or a combination thereof, and y:z is 1: (1~3).

Optionally, the organic solvent includes any one or more of cyclic esters, linear esters, linear ethers, and acetonitrile.

Optionally, the cyclic ester includes at least one of gamma-butyrolactone and cyclic carbonate. Optionally, the linear ester includes at least one of acetate or linear carbonate.

Optionally, the linear ether includes at least one of dimethoxyethane, dimethoxymethane, ethylene glycol dimethyl ether, 1,1,2,2-tetrafluoroethyl-2,2,3,3-tetrafluoropropyl ether, 1,1,2,2-tetrafluoroethyltrifluoromethyl ether, bis(1,1,2,2-tetrafluoroethyl) ether, 2,2,3,3-tetrafluoropropyl trifluoromethyl ether, 2,2,2-trifluoroethyl ether, 1,2-bis(1,1,2,2-tetrafluoroethoxy) ethane, 1,1,2,2-tetrafluoroethylethyl ether, and 1,1,2,2-tetrafluoroethyl-2,2,2-trifluoroethyl ether.

In a second aspect, the present disclosure also provides an electric device including a secondary battery as described above, where the secondary battery serves as a power supply for the electric device.

**Beneficial effect**

Compared to existing technologies, the present disclosure provides a secondary battery including a negative electrode plate, which includes a negative electrode current collector and a negative electrode active material layer arranged on the surface of the negative electrode current collector; where the negative electrode active material layer includes a negative electrode active substance, and the surface of the negative electrode active material layer is provided with a protective film; where, the negative electrode plate satisfies: $0.05 < Dv50/A < 0.25$, $300 \leq A/B \leq 5000$ and $5 < Dv50 < 25$; where Dv50 is the corresponding particle size when the cumulative volume percentage of the negative electrode active substance reaches 50%, with the unit thereof being $\mu m$, A is the thickness of the negative electrode active material layer, with the unit thereof being $\mu m$, and B is the average thickness of the protective film, with the unit thereof being $\mu m$. The negative electrode active substance in the negative electrode active material layer of the secondary battery in the present disclosure has the fast charging capability and good compatibility with an organic electrolyte, forming a non-soluble protective film on the surface of the negative electrode active material layer. The secondary battery of the present disclosure can enhance the high-rate charging and discharging capability, while greatly improving the cycle life.

**BRIEF DESCRIPTION OF THE DRAWINGS**

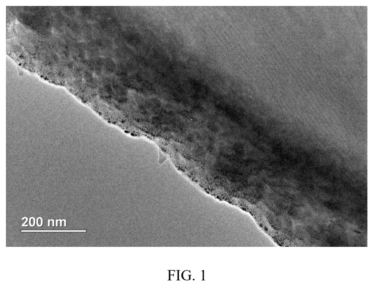

FIG. 1 shows a transmission electron microscope image of the protective film formed by the negative electrode active substance in the negative electrode active material layer of the negative electrode plate according to Embodiment 1 of the present disclosure.

**DETAILED DESCRIPTION OF THE EMBODIMENTS**

The technical solutions in the embodiments of the present disclosure will be described clearly and completely below in conjunction with the accompanying drawings in the embodiments of the present disclosure. Obviously, the described embodiments are only part of the embodiments of the present disclosure rather than all of them. Based on the embodiments of the present disclosure, all other embodiments obtained by those skilled in the art without creative work belong to the scope of protection of the present disclosure.

The following disclosure provides many different embodiments or examples to achieve different structures of the present disclosure. In order to simplify the disclosure of the present disclosure, the components and arrangements of specific examples are described below. Of course, they are only examples and are not intended to limit the present disclosure.

In order to improve the problem of difficulty in taking into account the fast charging performance of existing secondary batteries while achieving high energy density, the present disclosure provides a solution to develop a battery of high-capacity and high safety that takes into account both energy density and fast charging performance, which has the characteristic of excellent dynamic performance, and can take into account the characteristics of a long cycle life and a high energy density simultaneously, thereby solving the problem of relatively poor fast charging performance of the battery on the premise of a high energy density.

The embodiments of the present disclosure provide a secondary battery and an electric device. They will be explained below in detail, respectively. It should be noted that the order in which the following embodiments are described is not intended to limit the order of the embodiments.

The embodiments of the present disclosure provide a secondary battery including a negative electrode plate and a positive electrode plate, where the positive electrode plate includes a positive electrode current collector and a positive electrode active material layer arranged on a surface of the positive electrode current collector, and the positive electrode active material layer includes a positive electrode active substance including a lithium nickel cobalt manganese oxide; the negative electrode plate includes a negative electrode current collector and a negative electrode active material layer arranged on a surface of the negative electrode current collector, where the negative electrode active material layer includes a negative electrode active substance, and the surface of the negative electrode active material layer is provided with a protective film. The negative electrode plate satisfies: $0.05 < Dv50/A < 0.25$, $300 \leq A/B \leq 5000$ and $5 < Dv50 < 25$, where $Dv50$ is the corresponding particle size when the cumulative volume percentage of the negative electrode active substance reaches 50%, with the unit thereof being $\mu m$, A is the thickness of the negative electrode active material layer, with the unit thereof being $\mu m$, and B is the thickness of the protective film, with the unit thereof being $\mu m$.

In the embodiments of the present disclosure, the thickness of the negative electrode active material layer refers to the total thickness of the negative electrode active material layer coated on the current collector. If both surfaces of the current collector are coated with the negative electrode active material layer, the thickness of the negative electrode active material layer is the sum of the thicknesses of the negative electrode active material layers on both surfaces. In the battery system, the particle size of the negative electrode active substance has a direct impact on the packing of particles, while the morphology of particles, and the packing status among particles, etc., will directly affect the deintercalation process of lithium ions and migration rate of the ions, thereby affecting the performance of the battery. In addition, the thickness of the negative electrode active material layer is also an important factor affecting the capacity and rate characteristics of the battery. In addition, during the initial charging and discharging process of the battery, a passivation layer, also known as a protective film, will form at the solid-liquid interface between the negative electrode active material layer and the electrolyte. This layer of protective film can prevent the direct contact between the electrolyte and the negative electrode active material, reduce the decomposition of the electrolyte, and also prevent lithium ions from co-intercalation with solvent molecules, thereby avoiding the expansion of the graphite negative electrode and ensuring the capacity of the battery. Based on the above factors, by controlling the particle size distribution of the negative electrode active material particles and the thickness of the negative electrode active material layer in the present disclosure, the formation and thickness of the protective film can be affected, so that the battery can take into account the effects of the particle size distribution of the negative electrode active substance, the thickness of the negative electrode active material layer, and the thickness of the protective film on the performance of the battery, enabling the secondary battery to achieve fast charging performance while achieving high energy density. When the above three parameters of the secondary battery satisfies: $0.05 < Dv50/A < 0.25$, $300 < A/B < 5000$ and $5 < Dv50 < 25$, the secondary battery can achieve excellent fast charging performance and high energy density; where $Dv50$ is the corresponding particle size when the cumulative volume percentage of the negative electrode active substance reaches 50%, with the unit thereof being $\mu m$; A is the thickness of the negative electrode active material layer, with the unit thereof being $\mu m$; and B is the thickness of the protective film, with the unit thereof being $\mu m$.

In some embodiments, the lithium nickel cobalt manganese oxide includes $Li_aNi_xCo_yMn_zM_bO_2$; where, $0.9 < a < 1.1$, $0.6 \leq x < 1$, $0 < y < 0.3$, $0 < z < 0.4$ and $0 \leq b < 0.15$, M includes one or more of Zr, Zn, Cu, Cr, Mg, Fe, V, Ti, Sr, Sb, Y, W, and Nb or a combination thereof, and $y:z$ is $1:(1\sim3)$. A high-nickel ternary positive electrode active material with a nickel content of higher than or equal to 60% is used in the secondary battery, meanwhile the content ratio of cobalt to manganese in the material is limited to $1:(1\sim3)$, which can further improve the capacity of the battery. M is selected from one or more of Zr, Zn, Cu, Cr, Mg, Fe, V, Ti, Sr, Sb, Y, W, and Nb or a combination thereof, which can improve the mechanical performance of lithium nickel cobalt manganese oxide, and is beneficial for improving the material stability and enhancing the cycle performance of the battery.

In some embodiments, the value of $Dv50/A$ is any one of 0.05, 0.08, 0.10, 0.15, 0.20, 0.22, and 0.25, or a range consisting of any two of the above values.

In some embodiments, the value of $A/B$ is any one of 300, 400, 500, 600, 1000, 1500, 2000, 2500, 3000, 3500, 4000, 4500 and 5000, or a range consisting of any two of the above values. The value of $A/B$ can be selected from 600 to 2000.

The rate performance and energy density of the battery are related to the particle size of the negative electrode active material. A reasonable particle size can provide suitable diffusion path inside the particles for the active ions, which is beneficial for the high-rate charging of the battery; in addition, a reasonable particle size can enable the battery to have a thinner thickness of the active material layer while achieving the same energy density, which is more beneficial for the diffusion of active ions, reducing polarization and lithium precipitation, and improving the cycle performance. In some embodiments, when the particle size $Dv50$ of the negative electrode active substance satisfies: $5 \leq Dv50 \leq 25$, it can take into account the high-rate charging performance and cycle performance of the battery.

In some embodiments, the $Dv50$ ranges from 7 $\mu m$ to 18 $\mu m$.

In some embodiments, the value of $Dv50$ (in $\mu m$) is any one of 5, 7, 8, 10, 15, 18, 20, and 25, or a range consisting of any two of the above values.

In some embodiments, the secondary battery includes an organic electrolyte including an organic solvent, hydrogen fluoride, and a fluorine-containing lithium salt;

the secondary battery satisfies: $0.75 \leq 1000B/C \leq 3$; where, B is the thickness of the protective film, with the unit thereof being $\mu m$, and C is the concentration of hydrogen fluoride in the organic electrolyte, with the unit thereof being ppm.

Hydrogen fluoride (HF) in a non-aqueous organic electrolyte will form a protective film rich in inorganic salt components such as LiF, etc., during the initial charging process, such a film is more resistant to high temperature and high pressure, and is not easy to be dissolved in the organic solvent, effectively improving the initial discharge capacity, cycle life, and high and low temperature performance of the battery, and solving the problem of peeling off of the negative electrode active material during the charging process. The 1000B/C can effectively balance the charging rate and cycle life of the battery when it is in the range of 0.75 to 3.

In some embodiments, the value of 1000B/C is any one of 0.75, 1, 2, and 3, or a range consisting of any two of the above values.

In some embodiments, $90 \leq A \leq 180$, and the thickness of the negative active layer of the present disclosure is within the above range, which can balance the high energy density and high-rate charging and discharging performance of the battery.

In some embodiments, the value of A (in $\mu m$) is any one of 90, 100, 110, 120, 130, 140, 150, 160, 170 and 180, or a range consisting of any two of the above values.

In some embodiments, $0.015 < B < 0.3$ achieves the minimum irreversible capacity consumed by the battery, thereby achieving the purpose of improving the reversible capacity and energy density of the battery.

In some embodiments, the value of B (in $\mu m$) is any one of 0.015, 0.01, 0.02, 0.05, 0.1, 0.15, 0.20, 0.25 and 0.30, or a range consisting of any two of the above values.

The organic electrolyte of the secondary battery in the present disclosure contains hydrogen fluoride, which enables the secondary battery to form a protective film that is more resistant to high temperature and high pressure, and is not easy to be dissolved, so that the intercalation speed of lithium ions is high, and they are not easy to be deposited on the surface of the particles. Hydrogen fluoride (HF) in an organic electrolyte will form a protective film rich in inorganic salts such as LiF, etc., during the initial charging process, such a film is more resistant to high temperature and high pressure, and is not easy to be dissolved in the organic solvent, effectively improving the initial discharge capacity, cycle life, and high and low temperature performance of the battery, and solving the problem of peeling off of a negative electrode material such as graphite during the charging process of the battery. If the content of hydrogen fluoride is too high, it will deteriorate the cycle performance and increase the internal resistance, while a trace amount of hydrogen fluoride can promote the formation of a better interface protective film for lithium-ion pathways, further improving the charging speed; and if the content thereof is too low, such effects cannot be achieved. The hydrogen fluoride in the present disclosure originates from hydrogen fluoride impurity in a fluorine-containing lithium salt and trace decomposition of a fluorine-containing lithium salt. In some embodiments, $5 \leq C \leq 500$.

In some embodiments, the value of C (in ppm) is any one of 5, 10, 50, 100, 150, 200, 250, 300, 350, 400, 450 and 500, or a range consisting of any two of the above values.

In some embodiments of the present disclosure, the fluorine-containing lithium salt includes at least one of $LiPF_6$ (lithium hexafluorophosphate), $LiPO_2F_2$ (lithium difluorophosphate), LiFSI (lithium bis(difluorosulfonyl)imide), and LiTFSI (lithium bis(trifluoromethylsulfonyl)imide). The electrolyte in the battery system has a significant impact on the formation of the protective film for negative electrode. The reaction activity between electrolyte salts of different types and concentrations and solvents varies, resulting in differences in the composition and thickness of the formed protective films. Therefore, by adjusting the type or concentration of the electrolyte salts in the electrolyte, a protective film with better performance can be obtained, and the thickness of the protective film can also be adjusted.

In some embodiments, the mass percentage of the fluorine-containing lithium salt in the organic electrolyte is from 5 wt% to 25 wt%.

In some embodiments, $LiPF_6$ accounts for from 60% to 99% of the total weight of the fluorine-containing lithium salt.

In some embodiments, the mass percentage (wt%) of the fluorine-containing lithium salt in the organic electrolyte is any one of 5, 8, 10, 15, 18, 20 and 25, or a range consisting of any two of the above values.

The microstructure of the electrode plate of the battery has a significant impact on the performance of a lithium-ion battery. Researches have shown that the transport of lithium ions involves the transport process in the electrolyte in the electrode gaps, which is related to the porosity, pore structure, and electrode/electrolyte wettability of the electrode plate of the battery. The liquid-phase conduction of ions inside the pores of the negative porous electrode has a significant impact on improving the rapid charging capability of the battery, and the liquid-phase conduction of ions inside the pores of the negative porous electrode is closely related to the pore structure morphology of the negative electrode plate. Controlling the porosity of the negative electrode active material layer can affect the internal pore structure of the negative electrode active material layer, thereby affecting the liquid-phase conduction of ions and the electronic contact among the negative electrode active substance particles. In some embodiments, the porosity of the negative electrode active material layer is 20% to 50%. Within this range, the negative electrode plate has a better ability to retain the electrolyte, and it can also ensure good electrolyte wettability among the negative electrode active substance particles, and the interface charge transfer impedance between the negative electrode active substance and the electrolyte is also lower. Moreover, within this range, the adhesion state of the protective film on the negative electrode active material layer is tighter, so that the lithium ions are more smoothly transferred back and forth between the protective film and the negative electrode active material layer, improving the rapid charging capability and cycle life of the battery.

In some embodiments, the porosity (in%) of the negative electrode active material layer is any one of 20, 25, 30, 35, 40, 45 and 50, or a range consisting of any two of the above values.

Low compaction density is beneficial for changing the porosity distribution of the electrode itself, improving the infiltration ability of the electrolyte, and enhancing the liquid injection efficiency and consistency of the battery. High compaction density is beneficial for reducing the contact internal resistance of the material and facilitating the performance exertion of the material. However, as the electrolyte is difficult to infiltrate inside the electrode, the movement path of ions cannot be guaranteed, making it difficult to achieve smooth movement of ions and causing a decrease in performance and lifespan characteristics of the battery. In some embodiments, the compaction density of the negative electrode active material layer is 1.3-1.7 $g/cm^3$. Within this range, it is possible to maintain a reasonable pore structure of the negative electrode porous electrode while avoiding numerous side reactions between the negative electrode active substance and the electrolyte, which may affect the improvement effect on the performance of the battery.

In some embodiments, the value of the compaction density (in $g/cm^3$) of the negative electrode active material layer is any one of 1.3, 1.4, 1.5, 1.6 and 1.7, or a range consisting of any two of the above values.

In some embodiments, the negative electrode active substance includes at least one of artificial graphite, natural graphite, mesocarbon microbeads, hard carbon, soft carbon, carbon fiber, and modified graphite.

In some embodiments, the organic solvent includes one or more of cyclic esters, linear esters, linear ethers and acetonitrile.

In some embodiments, the cyclic ester includes at least one of gamma-butyrolactone and cyclic carbonate.

In some embodiments, the linear ester includes at least one of acetate or linear carbonate.

In some embodiments, the linear ether includes at least one of dimethoxyethane, dimethoxymethane, ethylene glycol dimethyl ether, 1, 1,2,2-tetrafluoroethyl-2,2,3,3-tetrafluoropropyl ether, 1,1,2,2-tetrafluoroethyltrifluoromethyl ether, bis(1,1,2,2-tetrafluoroethyl) ether, 2,2,3,3-tetrafluoropropyl trifluoromethyl ether, 2,2,2-trifluoroethyl ether, 1,2-bis(1,1,2,2-tetrafluoroethoxy) ethane, 1,1,2,2-tetrafluoroethylethyl ether, and 1,1,2,2-tetrafluoroethyl-2,2,2-trifluoroethyl ether.

In some embodiments, the cyclic carbonate includes at least one of ethylene carbonate and propylene carbonate.

In some embodiments, the acetate includes at least one of methyl acetate, ethyl acetate, propyl acetate, methyl propionate, and ethyl propionate.

In some embodiments, the linear carbonate includes at least one of dimethyl carbonate, diethyl carbonate, and methyl ethyl carbonate.

In some embodiments, the negative electrode active material layer further includes a conductive agent and a binder.

In some embodiments, the mass percentage of the active material in the negative electrode active material layer is 93% to 98%.

In some embodiments, the secondary battery further includes a positive electrode plate and a separator.

In some embodiments, the positive electrode plate includes a positive electrode current collector and a positive electrode active material, a binder, and a conductive agent covering the positive electrode current collector. The types and contents of the conductive agent and binder are not specifically limited and can be selected according to actual needs. In some embodiments, the conductive agent can include conductive carbon black, carbon nanotubes, and graphene, etc., and the binder can include polyvinylidene fluoride.

In some embodiments, the preparation of the positive electrode plate includes dispersing the above-mentioned positive electrode active material, the conductive agent, and the binder in a certain proportion in N-methylpyrrolidone (NMP), coating the resulting slurry onto aluminum foil, then drying, and subjecting the same to cold pressing and dividing into strips to obtain the positive electrode plate.

In some embodiments, the type of the separator is not particularly limited and can be selected according to actual needs. The separator can be a polypropylene film, a polyethylene film, a polyvinylidene fluoride film, a spandex film, an aramid film, or a multi-layer composite film modified by coating.

In some embodiments, the preparation of a secondary battery includes assembling the positive electrode plate, the negative electrode plate, the separator, and other parts of the battery, and then performing the processes such as shaping, baking, encapsulating, liquid injection, formation, and capacity grading, etc., to obtain the secondary battery. The types of the battery include pouch, cylinder, and aluminum shell, etc.

The present disclosure provides an electric device including the above-mentioned secondary battery, which serves as the power supply for the electric device. The electric device can be used for but is not limited to backup power sources, motors, electric vehicles, electric motorcycles, power assisted bicycles, bicycles, electric tools, and large household storage batteries, etc.

The present disclosure has carried out multiple tests, and some of the test results are now cited as references for further detailed description of the present invention, which will be explained in detail below in conjunction with specific Embodiments. It should be understood that these Embodiments are only used to describe the present disclosure rather than limiting the scope of the present disclosure.

**Embodiment 1**

A secondary battery was provided, and the preparation steps of which included:

(1) Preparation of positive electrode plate:
the positive electrode active material NCM811 ($LiNi_{0.8}Co_{0.1}Mn_{0.1}O_2$), the conductive agent carbon black, and the binder PVDF were mixed in a mass ratio of 96:2:2, then solvent NMP was added, the mixture was stirred under the action of a vacuum mixer to obtain a positive electrode slurry; the positive electrode slurry was uniformly coated on the positive electrode current collector aluminum foil, which was dried in the air at room temperature, and then transferred to an oven for further drying, and then subjected to rolling and cutting into sheets to obtain the positive electrode plate.
(2) Preparation of negative electrode plate:
the negative electrode active substance artificial graphite, the conductive agent carbon black, and the binder styrene butadiene rubber and the additive sodium carboxymethyl cellulose were mixed in a mass ratio of 96.5:1.5:1.5:0.5, then solvent deionized water was added, the mixture was stirred under the action of a vacuum mixer to obtain a negative electrode slurry; the negative electrode slurry was uniformly coated on the negative electrode current collector copper foil, which was dried in the air at room temperature, and then transferred to an oven for further drying, and then subjected to rolling and cutting into sheets to obtain the negative electrode plate. The Dv50 of the negative electrode active substance was 10 $\mu$m, and the thickness of two sides of the negative electrode active material layer was 100 $\mu$m.
(3) Preparation of electrolyte:
Ethylene carbonate (EC), methyl ethyl carbonate (EMC), and diethyl carbonate (DEC) were mixed in a volume ratio of 1:1:1, next the fluorine-containing lithium salt ($LiPF_6$ and LiFSI in a mass ratio of 2:1, where the proportion of $LiPF_6$ in the fluorine-containing lithium salt was 66%) was dissolved in a mixed organic solvent, which were mixed evenly to prepare an electrolyte, where the fluorine-containing lithium salt accounted for 15% of the total mass of the electrolyte;
(4) Preparation of a lithium-ion battery:
The positive electrode plate, the separator, and the negative electrode plate were stacked in sequence, and Celgard 2300 separator was used to wind the stack into a battery cell, which was then packed into a soft package shell, and subjected to processes of top side sealing, liquid injection, formation, and sorting etc., to obtain a lithium-ion battery, and the parameters of the lithium-ion battery are detailed in Table 1.

**Embodiments 2-4:** The preparation methods of which were the same as that in Embodiment 1, except that the type of the positive electrode material and the Dv50 of the negative electrode active material were adjusted; the content of HF and the thickness of the protective film were adjusted by adjusting the mass concentration of the fluorine-containing lithium salt; and the porosity and compaction density of the negative electrode active material layer were adjusted by adjusting the rolling pressure of the negative electrode plate, and the specific parameters of Embodiments 2-4 are detailed in Table 1.

**Embodiments 5-6:** The type of the positive electrode material and the Dv50 of the negative electrode active material were adjusted and the mass concentration of the fluorine-containing lithium salt was adjusted at the same time so as to adjust the content of HF and the thickness of the protective film; and the specific parameters of Embodiments 5-6 are detailed in Table 1.

**Embodiments 7-8:** The preparation methods of which were the same as that in Embodiment 1, except that by adjusting the coating amount of the negative electrode active material layer and controlling the rolling pressure of the negative electrode plate, the thickness of the negative electrode active material layer was thus adjusted, and the specific parameters of Embodiments 7-8 are detailed in Table 1.

**Embodiments 9-10:** The preparation methods of which were the same as that in Embodiment 1, except that by adjusting the rolling pressure of the negative electrode plate, the compaction density was thus adjusted, and the specific parameters of Embodiments 9-10 are detailed in Table 1.

**Embodiments 11-12:** The preparation methods of which were the same as that in Embodiment 1, except that by adjusting the coating amount of the negative electrode active material layer and controlling the rolling pressure of the negative electrode plate, the thickness of the negative electrode active material layer was thus adjusted, and the specific parameters of Embodiments 11-12 are detailed in Table 1.

**Embodiments 13-14:** The preparation methods of which were the same as that in Embodiment 1, except that by adjusting the rolling pressure of the negative electrode plate, the porosity of the negative electrode active material layer was thus adjusted, and the specific parameters of Embodiments 13-14 are detailed in Table 1.

**Embodiments 15-16:** The preparation methods of which were the same as that in Embodiment 1, except that by adjusting the rolling pressure of the negative electrode plate, the compaction density of the negative electrode active material layer was thus adjusted, and the specific parameters of Embodiments 15-16 are detailed in Table 1.

Embodiment 17: A lithium-ion battery was provided, and the preparation method of which was the same as that in Embodiment 1, except that during the preparation process of the electrolyte, the fluorine-containing lithium salt was adjusted to $LiPF_6$ and $LiPO_2F_2$, and the mass ratio of $LiPF_6$ to $LiPO_2F_2$ in the fluorine-containing lithium salt was 99:1 (i.e., the mass proportion of $LiPF_6$ in the fluorine-containing lithium salt was 99%).

Embodiment 18: A lithium-ion battery was provided, and the preparation method of which was the same as that in Embodiment 1, except that during the preparation process of the electrolyte, the fluorine-containing lithium salt was adjusted to $LiPF_6$ and LiTFSI, and the mass ratio of $LiPF_6$ to LiTFSI in the fluorine-containing lithium salt was 85:15 (i.e., the mass proportion of $LiPF_6$ in the fluorine-containing lithium salt was 85%).

Embodiment 19: A lithium-ion battery was provided, and the preparation method of which was the same as that in Embodiment 1, except that during the preparation process of the electrolyte, the fluorine-containing lithium salt was only $LiPF_6$.

Comparative Examples 1-2: The preparation methods of which were the same as that in Embodiment 1, except that the Dv50 of the negative electrode active material was adjusted, and the mass concentration of the fluorine-containing lithium salt was adjusted so as to adjust the content of HF and the thickness of the protective film, and the specific parameters of Comparative Examples 1 and 2 are detailed in Table 1.

**Test Example 1**

In this test example, the performance tests on the secondary batteries of Embodiments 1 to 19 and Comparative Examples 1 to 2 of the present disclosure were carried out, respectively. The performance parameters of the battery were measured according to the following methods, respectively, and the results are detailed in Table 2:

(1) Rate performance testing:
The lithium-ion battery was left to stand at 25°C for 30 minutes, and discharged at a constant current of 1C, then charged at a constant current of 1C and a constant voltage, left to stand for 5 minutes and discharged at a constant current of 1C, the discharge capacity at this time was the actual capacity C0 of the battery at 1C, then the battery was charged at a constant current of 1C and a constant voltage, left to stand for 5 minutes and discharged at a constant current of 2C, the discharge capacity at C1 was the discharge capacity at 2C. Capacity retention rate at 2C rate = (discharge capacity at 2C/discharge capacity at 1C) $\times$ 100%=C1/C0$\times$100%.

(2) Dynamic performance testing:
The lithium-ion battery was left to stand at 25°C for 30 minutes, then fully charged at xC and fully discharged at 1C, which was repeated for 10 times, then fully charged at xC again. Then the negative electrode plate was disassembled and the lithium precipitation on the surface of the negative electrode plate was observed. If there was no lithium precipitation on the surface of the negative electrode, the test was carried out again from the charging rate xC in an increment of 0.1C as the gradient until lithium precipitation occurred on the surface of the negative electrode, the test was stopped, and the maximum charging rate of the battery was obtained by subtracting 0.1C from the charging rate xC at this point.

(3) Cycle performance testing:
The lithium-ion battery was left to stand at 25°C for 30 minutes, and discharged at a constant current of 1C and left to stand for 10 minutes, then charged at a constant current of 1C and a constant voltage and left to stand for 10 minutes to perform a full charge and discharge cycle test, and the capacity retention rate at 1000 cycles was recorded.

(4) Battery capacity testing:
After the lithium-ion battery was left to stand at 25°C for 30 minutes, the following steps were carried out: 1) discharging at a constant current of 0.33C, 2) left to stand for 30 minutes, 3) charging at a constant current of 0.33C and a constant voltage, with a cut-off current of 0.05C, 4) left to stand for 30 minutes, 5) discharging at a constant current of 0.33C, and repeating 2) to 5) for three times, and the average value of the three tests was taken as the capacity of the battery.

Table 1

| | Positive electrode materials | Thickness A of negative electrode active material layer ($\mu$m) | Dv50 ($\mu$m) | Dv50/A | Types of fluorine-containing lithium salt | Concent ration of fluorine - containing lithium salt (%) | Average thick ness B of prote ctive film ($\mu$m) | A/B | 1000 B/C | Cont ent of hydro gen fluori de C (ppm) | Poro sity P (%) | Com pact density PD (g/c m$^3$) |
|---|---|---|---|---|---|---|---|---|---|---|---|---|
| Embodiment 1 | $LiNi_{0.8}Co_{0.1}Mn_{0.1}O_2$ | 100 | 10 | 0.10 | $LiPF_6$+ LiFSI | 15 | 0.22 | 454.5 5 | 1.47 | 150 | 30 | 1.6 |
| Embodiment 2 | $LiNi_{0.7}Co_{0.1}Mn_{0.2}O_2$ | 100 | 15 | 0.15 | $LiPF_6$+ LiFSI | 11 | 0.15 | 666.6 7 | 1.50 | 100 | 25 | 1.65 |
| Embodiment 3 | $LiN_{i0.7}Co_{0.05}Mn_{0.15}Fe_{0.1}O_2$ | 100 | 5 | 0.05 | $LiPF_6$+ LiFSI | 5 | 0.015 | 6666. 67 | 3.00 | 5 | 40 | 1.3 |
| Embodiment 4 | $LiNi_{0.7}Co_{0.05}Mn_{0.15}Nb_{0.1}O_2$ | 100 | 8 | 0.08 | $LiPF_6$+ LiFSI | 19 | 0.3 | 333.3 3 | 0.75 | 400 | 30 | 1.6 |
| Embodiment 5 | $LiNi_{0.9}Co_{0.02}Mn_{0.06}W_{0.02}O_2$ | 100 | 7 | 0.07 | $LiPF_6$+ LiFSI | 8 | 0.05 | 2000.00 | 2.50 | 20 | 25 | 1.68 |
| Embodiment 6 | $LiNi_{0.6}Co_{0.1}Mn_{0.3}O_2$ | 100 | 18 | 0.18 | $LiPF_6$+ LiFSI | 25 | 0.8 | 125.00 | 1.60 | 500 | 30 | 1.6 |
| Embodiment 7 | $LiNi_{0.8}Co_{0.1}Mn_{0.1}O_2$ | 90 | 10 | 0.11 | $LiPF_6$+ LiFSI | 15 | 0.22 | 409.0 9 | 1.47 | 150 | 30 | 1.5 |
| Embodiment 8 | $LiNi_{0.8}Co_{0.1}Mn_{0.1}O_2$ | 180 | 10 | 0.06 | $LiPF_6$+ LiFSI | 15 | 0.22 | 818.1 8 | 1.47 | 150 | 30 | 1.5 |
| Embodiment 9 | $LiNi_{0.8}Co_{0.1}Mn_{0.1}O_2$ | 100 | 10 | 0.10 | $LiPF_6$+ LiFSI | 15 | 0.22 | 454.5 5 | 1.47 | 150 | 30 | 1.3 |
| Embodiment 10 | $LiNi_{0.8}Co_{0.1}Mn_{0.1}O_2$ | 100 | 10 | 0.10 | $LiPF_6$+ LiFSI | 15 | 0.22 | 454.5 5 | 1.47 | 150 | 30 | 1.7 |
| Embodiment 11 | $LiNi_{0.8}Co_{0.1}Mn_{0.1}O_2$ | 80 | 10 | 0.13 | $LiPF_6$+ LiFSI | 15 | 0.22 | 363.6 4 | 1.47 | 150 | 30 | 1.5 |
| Embodiment 12 | $LiNi_{0.8}Co_{0.1}Mn_{0.1}O_2$ | 190 | 10 | 0.05 | $LiPF_6$+ LiFSI | 15 | 0.22 | 863.6 4 | 1.47 | 150 | 30 | 1.5 |
| Embodiment 13 | $LiNi_{0.8}Co_{0.1}Mn_{0.1}O_2$ | 100 | 10 | 0.10 | $LiPF_6$+ LiFSI | 15 | 0.22 | 454.5 5 | 1.47 | 150 | 10 | 1.5 |

| | Positive electrode materials | Thickness A of negative electrode active material layer ($\mu$m) | Dv5 0 ($\mu$m) | Dv50/ A | Types of fluorine-containing lithium salt | Concent ration of fluorine - containing lithium salt (%) | Average thick ness B of prote ctive film ($\mu$m) | A/B | 1000 B/C | Cont ent of hydro gen fluori de C (ppm) | Poro sity P (%) | Com pact density PD (g/c m$^3$) |
|---|---|---|---|---|---|---|---|---|---|---|---|---|
| Embodiment 14 | $LiNi_{0.8}Co_{0.1}Mn_{0.1}O_2$ | 100 | 10 | 0.10 | $LiPF_6$+ LiFSI | 15 | 0.22 | 454.5 5 | 1.47 | 150 | 60 | 1.5 |
| Embodiment 15 | $LiNi_{0.8}Co_{0.1}Mn_{0.1}O_2$ | 100 | 10 | 0.10 | $LiPF_6$+ LiFSI | 15 | 0.22 | 454.5 5 | 1.47 | 150 | 30 | 1.2 |
| Embodiment 16 | $LiNi_{0.8}Co_{0.1}Mn_{0.1}O_2$ | 100 | 10 | 0.10 | $LiPF_6$+ LiFSI | 15 | 0.22 | 454.5 5 | 1.47 | 150 | 30 | 1.9 |
| Embodiment 17 | $LiNi_{0.8}Co_{0.1}Mn_{0.1}O_2$ | 100 | 10 | 0.10 | $LiPF_6$+ Li-$PO_2F_2$ | 15 | 0.22 | 454.5 5 | 1.47 | 150 | 30 | 1.6 |
| Embodiment 18 | $LiNi_{0.8}Co_{0.1}Mn_{0.1}O_2$ | 100 | 10 | 0.10 | $LiPF_6$+ LiTFSI | 15 | 0.22 | 454.5 5 | 1.47 | 150 | 30 | 1.6 |
| Embodiment 19 | $LiNi_{0.8}Co_{0.1}Mn_{0.1}O_2$ | 100 | 10 | 0.10 | $LiPF_6$ | 15 | 0.20 | 500 | 1.33 | 150 | 30 | 1.6 |
| Comparative Example 1 | $LiNi_{0.8}Co_{0.1}Mn_{0.1}O_2$ | 100 | 3 | 0.03 | $LiPF_6$+ LiFSI | 3 | 0.001 2 | 8333 3.33 | 0.40 | 3 | 28 | 1.65 |
| Comparative Example 2 | $LiNi_{0.8}Co_{0.1}Mn_{0.1}O_2$ | 100 | 30 | 0.30 | $LiPF_6$+ LiFSI | 20 | 0.37 | 270.2 7 | 0.67 | 550 | 30 | 1.6 |

Table 2

| | Capacity of battery (Ah) | Capacity retention rate at 1000 cycles at 1C/1C (%) | Capacity retention rate at 2C (%) | Rate for lithium precipitation (C) |
|---|---|---|---|---|
| Embodiment 1 | 4 | 96 | 90 | 3.2 |
| Embodiment 2 | 3.9 | 95 | 91 | 3.2 |
| Embodiment 3 | 2.5 | 90 | 88 | 2.8 |
| Embodiment 4 | 3.9 | 94 | 90 | 3 |
| Embodiment 5 | 3.8 | 92 | 90 | 2.9 |
| Embodiment 6 | 3.6 | 90 | 87 | 2.7 |
| Embodiment 7 | 2.7 | 94 | 90 | 3.1 |
| Embodiment 8 | 4.6 | 91 | 91 | 3 |
| Embodiment 9 | 2.8 | 94 | 90 | 3 |
| Embodiment 10 | 3.8 | 92 | 92 | 3.2 |
| Embodiment 11 | 2.5 | 88 | 90 | 3 |
| Embodiment 12 | 2.7 | 89 | 85 | 2.6 |
| Embodiment 13 | 3.6 | 87 | 87 | 2.7 |
| Embodiment 14 | 3.5 | 86 | 86 | 2.6 |
| Embodiment 15 | 2.4 | 88 | 87 | 2.6 |
| Embodiment 16 | 3.5 | 85 | 85 | 2.7 |
| Embodiment 17 | 4.1 | 95 | 91 | 3.1 |
| Embodiment 18 | 4 | 96 | 93 | 3.3 |
| Embodiment 19 | 4 | 94 | 88 | 3 |
| Comparative Example 1 | 1.8 | 70 | 72 | 1.5 |
| Comparative Example 2 | 2 | 75 | 68 | 1.3 |

From Table 1, it can be seen that the embodiments of the present disclosure have achieved the following technical effects: they can improve the rate charging capability, have excellent charging and discharging performance such as fast charging speed, good cycle life and high safety of the battery.

By comparing Comparative Examples 1-2 with Embodiments 1-19, it can be found that in Comparative Examples 1-2, when the average thickness of the protective film formed by the active substance particles in the negative electrode active material layer and the content of hydrogen fluoride in the electrolyte do not satisfy the scope of the present disclosure, the cycle or lithium precipitation capability of the battery deteriorates, and it is impossible to take into account the long cycle life, high energy density, and fast charging capability simultaneously.

A secondary battery and an electric device provided in the present disclosure have been described in detail hereinbefore, and specific Embodiments are used herein to explain the principles and embodiments of the present disclosure. The above explanations for the embodiments are only used to assist in the understanding of the method and core idea of the present disclosure, meanwhile, for those skilled in the art, changes can be made to the specific embodiments and scope of application based on the ideas of the present disclosure. In summary, the content of this specification should not be understood as limitation on the present disclosure.

**Claims**

1. A secondary battery, **characterized by** comprising a negative electrode plate and a positive electrode plate, the positive electrode plate comprises a positive electrode current collector and a positive electrode active material layer arranged on a surface of the positive electrode current collector, and the positive electrode active material layer comprises a positive electrode active substance comprising a lithium nickel cobalt manganese oxide;

the negative electrode plate comprises a negative electrode current collector and a negative electrode active material layer arranged on a surface of the negative electrode current collector; the negative electrode active material layer comprises a negative electrode active substance, and a surface of the negative electrode active material layer is provided with a protective film, the negative electrode plate satisfies:

$$0.05 \leq Dv50/A \leq 0.25, \ 300 \leq A/B \leq 5000 \ and \ 5 \leq Dv50 \leq 25;$$

wherein, Dv50 is the corresponding particle size when the cumulative volume percentage of the negative electrode active substance reaches 50%, with the unit thereof being $\mu$m;

A is the thickness of the negative electrode active material layer, with the unit thereof being $\mu$m; and
B is the thickness of the protective film, with the unit thereof being $\mu$m.

2.  The secondary battery of claim 1, **characterized in that** the negative electrode plate satisfies: 600<A/B<2000.

3.  The secondary battery of claim 1, **characterized by** comprising an organic electrolyte, and the organic electrolyte comprises an organic solvent, hydrogen fluoride, and a fluorine-containing lithium salt;
    the secondary battery satisfies: $0.75 \leq 1000B/C \leq 3$; wherein, B is the thickness of the protective film, with the unit thereof being $\mu$m; and C is the concentration of hydrogen fluoride in the organic electrolyte, with the unit thereof being ppm.

4.  The secondary battery of claim 3, **characterized in that** $90 \leq A \leq 180$.

5.  The secondary battery of claim 3, **characterized in that** 0.015<B<0.3.

6.  The secondary battery of claim 3, **characterized in that** $5 \leq C \leq 500$.

7.  The secondary battery of claim 3, **characterized in that** the fluorine-containing lithium salt comprises at least one of $LiPF_6$, $LiPO_2F_2$, LiFSI and LiTFSI.

8.  The secondary battery of claim 1, **characterized in that** the porosity of the negative electrode active material layer is from 20% to 50%.

9.  The secondary battery of claim 1, **characterized in that** the compaction density of the negative electrode active material layer is from 1.3 $g/cm^3$ to 1.7 $g/cm^3$.

10. The secondary battery of claim 1, **characterized in that** the negative electrode active substance comprises at least one of artificial graphite, natural graphite, mesocarbon microbeads, hard carbon, soft carbon, carbon fiber, and modified graphite.

11. The secondary battery of any one of claims 1 to 10, **characterized in that** the lithium nickel cobalt manganese oxide comprises $Li_aNi_xCo_yMn_zM_bO_2$; wherein, 0.9 < a < 1.1, $0.6 \leq x$ < 1, 0 < y < 0.3, 0 < z < 0.4, and $0 \leq b$ < 0.15, M comprises one or more of Zr, Zn, Cu, Cr, Mg, Fe, V, Ti, Sr, Sb, Y, W, and Nb or a combination thereof, and y:z is 1: (1~3).

12. The secondary battery of claim 3, **characterized in that** the organic solvent comprises any one or more of cyclic esters, linear esters, linear ethers, and acetonitrile.

13. The secondary battery of claim 3, **characterized in that** the mass percentage of the fluorine-containing lithium salt in the organic electrolyte is from 5 wt% to 25 wt%.

14. The secondary battery of claim 1, **characterized in that** the Dv50 ranges from 7 $\mu$m to 18 $\mu$m.

15. An electric device, **characterized by** comprising the secondary battery of any one of claims 1 to 14, and the secondary battery serves as the power supply for the electric device.

FIG. 1

## INTERNATIONAL SEARCH REPORT

| International application No. |
| --- |
| **PCT/CN2023/140127** |

**A. CLASSIFICATION OF SUBJECT MATTER**

H01M 4/133(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M4/-; H01M10/-

Documentation searched other than minimum documentation to the extent that such documents are included in the fields searched

Electronic data base consulted during the international search (name of data base and, where practicable, search terms used)

CJFD, CNTXT, DWPI, ENTXTC, USTXT, VEN: 电池, 正极, 负极, 活性材料, 活性物质, 锂镍钴锰, Dv50, 粒径, 厚度, 保护层, 保护膜, 钝化层, 钝化膜, 电解液, 氟, 锂盐, LiPF6, 六氟磷酸锂, LiPO2F2, 二氟磷酸锂, LiFSI, 双二氟磺酰亚胺锂, LiTFSI, 双三氟甲基磺酸亚酰胺锂, 氟化氢, HF, 浓度, battery, anode, cathode, lithium, nickel, cobalt, manganese, oxide, protective, film, electrolyte, hydrogen, fluoride, fluorine, lithium, salt, thickness, concentration, particle, diameter, size

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116314610 A (SUNWODA ELECTRIC VEHICLE BATTERY CO., LTD.) 23 June 2023 (2023-06-23)<br>claims 1-10, and description, paragraphs 37, 50, and 58 | 1-15 |
| A | CN 111261939 A (NINGDE AMPEREX TECHNOLOGY LTD.) 09 June 2020 (2020-06-09)<br>description, paragraphs 90-126 and 133-136 | 1-15 |
| A | CN 113644317 A (NINGDE CONTEMPORARY AMPEREX TECHNOLOGY CO., LTD.) 12 November 2021 (2021-11-12)<br>entire document | 1-15 |
| A | CN 115832201 A (SUNWODA ELECTRIC VEHICLE BATTERY CO., LTD.) 21 March 2023 (2023-03-21)<br>entire document | 1-15 |
| A | US 2021242498 A1 (CONTEMPORARY AMPEREX TECHNOLOGY CO., LTD.) 05 August 2021 (2021-08-05)<br>entire document | 1-15 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 February 2024** | **01 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/140127**

### C. DOCUMENTS CONSIDERED TO BE RELEVANT

| Category* | Citation of document, with indication, where appropriate, of the relevant passages | Relevant to claim No. |
|---|---|---|
| A | US 2022149437 A1 (CONTEMPORARY AMPEREX TECHNOLOGY CO., LTD.) 12 May 2022 (2022-05-12) entire document | 1-15 |

Form PCT/ISA/210 (second sheet) (July 2022)

**INTERNATIONAL SEARCH REPORT**
Information on patent family members

International application No.

**PCT/CN2023/140127**

| Patent document cited in search report | | | Publication date (day/month/year) | Patent family member(s) | | | Publication date (day/month/year) |
|---|---|---|---|---|---|---|---|
| CN | 116314610 | A | 23 June 2023 | None | | | |
| CN | 111261939 | A | 09 June 2020 | None | | | |
| CN | 113644317 | A | 12 November 2021 | None | | | |
| CN | 115832201 | A | 21 March 2023 | None | | | |
| US | 2021242498 | A1 | 05 August 2021 | US | 11581579 | B2 | 14 February 2023 |
| | | | | HUE | 061906 | T2 | 28 August 2023 |
| | | | | EP | 3780179 | A1 | 17 February 2021 |
| | | | | EP | 3780179 | A4 | 28 July 2021 |
| | | | | EP | 3780179 | B1 | 22 March 2023 |
| | | | | PL | 3780179 | T3 | 29 May 2023 |
| | | | | JP | 2021534555 | A | 09 December 2021 |
| | | | | JP | 7106746 | B2 | 26 July 2022 |
| | | | | WO | 2020043153 | A1 | 05 March 2020 |
| | | | | PT | 3780179 | T | 21 April 2023 |
| | | | | KR | 20210033033 | A | 25 March 2021 |
| | | | | KR | 102535068 | B1 | 26 May 2023 |
| US | 2022149437 | A1 | 12 May 2022 | EP | 3905412 | A1 | 03 November 2021 |
| | | | | EP | 3905412 | A4 | 13 April 2022 |
| | | | | EP | 3905412 | C0 | 09 August 2023 |
| | | | | WO | 2021017759 | A1 | 04 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310458235